# EUROPEAN PATENT APPLICATION

(11) **EP 4 238 869 A1**
(43) Date of publication of application: **06.09.2023**
(21) Application number: 22160071.1
(22) Date of filing: 03.03.2022
(51) Int. Cl.: B64C 39/00, G05D 1/00

(54) **SYSTEM FOR COLLABORATIVE THREAT EVASION TACTICS COORDINATION**

(71) Applicant: Airbus Defence and Space GmbH, 82024 Taufkirchen (DE)
(72) Inventor: PÉREZ, Antonio, 82024 Taufkirchen (DE); RIBAS DE AMARAL, Janaina, 82024 Taufkirchen (DE); COOK, Alasdair, 82024 Taufkirchen (DE)
(74) Representative: LKGLOBAL Lorenz & Kopf Patentanwalt Attorney at Law PartG mbB

(57) **Abstract**

A system (10) with a first mobile entity (20) and second mobile entities (30) is described. The system implements an approach where the second mobile entities are commanded to move along a predetermined trajectory to protect the first mobile entity from external threats.

## Description

### Technical Field

The description relates to a system with a first mobile entity and at least one second mobile entity. The system is configured to carry out collaborative threat evasion. In particular, the system may relate to an aircraft that is accompanied by, e.g., unmanned, aerial devices that are coordinated in moving along a flight trajectory and taking countermeasures to protect the aircraft from external threats.

### Technical Background

Mobile entities like aircraft, land vehicles, submarine vessels, and watercraft may include devices for self-protection or taking countermeasures when it is expected that these mobile entities are exposed to external threats. This particularly applies to military devices or mobile entities that are designed to be used in military operations or affected by military operations, or that are exposed to external threats.

Typically, the devices for self-protection or taking countermeasures are deployed on the platform itself which is to be protected or takes countermeasures.

While the existing devices for self-protection and taking countermeasures provide a good level of protection, it may be desirable to further improve the existing level of protection for high-value mobile entities.

### Summary

It may be seen as an object to increase the level of protection for high-value mobile entities, in particular such mobile entities which are used in military operations, or which may be affected by military operations or any other external threats.

This object is solved by the subject matter of the independent claims.

A system according to the features of the independent claim is provided. Further developments can be derived from the dependent claims and from the following description.

According to an aspect, a system comprises a first mobile entity and at least one second mobile entity. The first mobile entity is communicatively connected to at least one sensor configured to acquire information about the surroundings of the first mobile entity. The first mobile entity is configured to determine that an external threat acquired by the at least one sensor poses a risk for the first mobile entity. The system is configured to, when it was determined that the external threat acquired by the at least one sensor poses a risk for the first mobile entity, command at least one of the at least one second mobile entity to initiate a countermeasure against the external threat. The first mobile entity is configured to command the at least one of the at least one second mobile entity to move along a trajectory between a position of the external threat and the first mobile entity.

The at least one sensor may be located aboard the first mobile entity or may be part of a distinct sensor system which may be static or mobile. The first mobile entity may be connected to the sensor by wire (especially when the sensor is located aboard the first mobile entity) or wireless (when the sensor is located remote from the first mobile entity; however, it is also conceivable that a sensor aboard the first mobile entity is connected in a wireless manner to other components of the first mobile entity, e.g., to a flight computer or mission computer that receives the data from the sensor and determines a maneuver based on the sensor data).

For example, an external threat poses a risk for the first mobile entity when an attacking object is detected, and this attacking object is on a collision course with the first mobile entity. Another example for an external threat that poses a risk for the first mobile entity is when a missile or any other weapon is detected within a predetermined distance or range from the first mobile entity.

For example, the at least one of the at least one second mobile entity is commanded by so that it moves to be located between a position of the external threat while the first mobile entity moves. This requires, for example, that the at least one of the at least one second mobile entity moves when one or both of the position of the external threat and the first mobile entity moves.

The second mobile entity may be provided with commands by a flight computer or mission computer of the system to move along a predetermined trajectory to protect the first mobile entity from the external threat. The flight computer or mission computer may be part of the first mobile entity, or it may be a distributed computer system that is distributed over the first and second mobile entities. It is also conceivable that the flight computer or mission computer (or parts thereof) is located in a remotely located mission control center.

In one example, the first mobile entity commands the second mobile entity to follow an interception trajectory between the first mobile entity and the position of the external threat. Alternatively, the second mobile entities are equipped with a flight computer or mission computer that detects the external threat based on sensor data and determines an appropriate countermeasure to protect the first mobile entity.

The system described herein allows the first mobile entity to protect itself from external threats (missiles, guns, or any other weapon attacks) by commanding and coordinating one or more second mobile entities (like unmanned platforms) moving around as a team or fleet.

The functions of the system may be implemented on a flight computer or mission computer that may be hosted on the first mobile entity. As will be described in more detail below, the flight computer or mission computer knows the state vector of the system (first mobile entity and at least one second mobile entity), receives information about the external threat (like position, trajectory, and velocity of an approaching missile or other threat), and commands in real-time one or more second mobile entities to take countermeasures (like being interposed in the trajectory of the external threat to protect the first mobile entity).

In one preferred example, the first mobile entity and the second mobile entities are aerial vehicles, wherein the first mobile entity is a high-value object that is protected by unmanned (second) mobile entities. However, it should be understood that reference to aerial vehicles is provided as an example only. The system described herein can be applied to land vehicle, submarine vessels, spacecraft, watercraft, etc.

For example, the system will evade the incoming weapon by means of countermeasures deployed collaboratively from the most suitable one of the second mobile entities. Chaffs, flares, decoys or jammers may be fired or deployed by the first mobile entity and additionally deployed by the second mobile entities to allow a successful escape of the first mobile entity.

Additionally, one or more of the second mobile entities may be commanded from the first mobile entity to follow an interception trajectory between the external threat and the first mobile entity. This interception trajectory, which may be a three-dimensional function of time and dynamics of the first mobile entity, is designed to keep the external threat away from the first mobile entity. State vectors of the system and a common strategy are known by the first and second mobile entities. The system can optimally plan the next maneuver for both of them to confuse sensors of the external threat.

In a worst case situation, a second mobile entity may act as a shield, receiving the impact of the missile, saving the first mobile entity at least from that attack.

The strategy to intercept incoming threats can be manually set by a human operator of the first mobile entity or located in a remote mission control center among different levels of "self-aggressiveness" of the second mobile entities or be automatically decided by the system if previously set in that way. In that sense, for some types of incoming threats, it may be that the most effective tactic to protect the first mobile entity consists in an offensive maneuver where one or more unmanned second mobile entities are set as sacrifice and are directly fired against the external threat. Trajectories of these sacrifice unmanned platforms are coordinated in real-time with those from the first mobile entity via a datalink to maximize survivability, forcing for example an early intercept of threats ahead of the path that the first mobile entity is going to fly afterwards.

According to an embodiment, the system comprises a plurality of second mobile entities, wherein each second mobile entity comprises a drive which is configured to cause a movement of the second mobile entity.

For example, the second mobile entity is an unmanned aerial vehicle, a submarine vessel, a boat or any other watercraft, or a land vehicle. The second mobile entity can move with its own drive along a predetermined trajectory. The trajectory along which the second mobile entity or entities move may be commanded by the first mobile entity.

According to a further embodiment, the plurality of second mobile entities is configured to be operated in a first state or in a second state. In the first state, the plurality of second mobile entities is configured to move around the first mobile entity or along a trajectory of the first mobile entity. In the second state, at least one of the plurality of second mobile entities is commanded to attack or clear the external threat.

The first state may be a default mode of operation of the system. The first mobile entity moves along a planned trajectory thereof and follows a mission plan while the plurality of second mobile entities accompany the first mobile entity. In the first state, the second mobile entities may autonomously follow a flight path in the surroundings of the first mobile entity, for example within a predetermined range or at a given distance to the first mobile entity. The second mobile entities may receive position information and flight path information of the first mobile entity and can autonomously calculate their own flight path.

In the first state, the second mobile entities may communicate information to the first mobile entity so that the first mobile entity is able to determine a state vector of the entire system. This state vector includes information about position, flight path, velocity, etc. of each of the second mobile entities. The state vector is used by the first mobile entity or by one or more of the second mobile entities when the second mobile entities transition to the second state.

In the second state, when an external threat approaches the system or the first mobile entity, one or more of the second mobile entities may leave their position they have during the first state and move along a trajectory or to an interception point to be able to attack or clear the external threat.

The second mobile entities may autonomously change from the first state to the second state when one of the second mobile entities detects an external threat. For this purpose, one or more of the second mobile entities may be equipped with sensors for sensing the surroundings of the system. The sensors may be optical sensors like cameras, infrared sensors, or the like, Radar, Lidar, acoustic sensors, etc.

Alternatively, the first mobile entity may initiate a state change of the second mobile entities from the first state to the second state. This may happen when the first mobile entity detects an external threat. The first mobile entity may include sensors of the same type as mentioned with regard to the second mobile entities. However, the first mobile entity may also receive information about an external threat from external sensor platforms like mobile or stationary warning and control systems that are configured to carry out surveillance. The first mobile entity may be connected to such an external sensor platform by a datalink to receive information about external threats.

In the second state, the state vector of the system is used to identify that one of the second mobile entities which is best located to attack or clear the external threat. For example, the second mobile entities may identify and select that one of the second mobile entities which is closest to the external threat and the selected second mobile entity then attacks or clears the external threat. However, in the second state, it is conceivable that the first mobile entity determines how the second mobile entities act and which second mobile entity is supposed to attack and clear the external threat. For that purpose, the first mobile entity determines one or more of the second mobile entities and commands that one or those to follow a certain trajectory and to thereby clear the external threat at an interception point.

With this approach, the first mobile entity is able to protect itself from external threats like missiles, guns, or any other weapon attacks by commanding and coordinating the second mobile entities to carry out a counterattack maneuver or to move to an interception point where the external threat is cleared by the second mobile entity. Thereby, the external threat is prevented from hitting the first mobile entity.

According to a further embodiment, in the second state, at least one of the plurality of second mobile entities is commanded to move along a trajectory to an interception point with the external threat.

Based on the information about the external threat (position, acquired trajectory, characterization), a predicted trajectory of the external threat may be determined. The predicted trajectory may be determined by a flight computer or mission computer that is part of the system, e.g., located aboard the first mobile entity and/or aboard one of the second mobile entities.

In this embodiment, one of the second mobile entities moves along a trajectory so that it is hit by the external threat. Thereby, the first mobile entity is protected by this maneuver of the second mobile entity. This trajectory of the second mobile entity may be referred to as an attack trajectory.

According to a further embodiment, the at least one second mobile entity is an unmanned vehicle.

According to a further embodiment, the at least one second mobile entity comprises an effector that is configured to perform a countermeasure in response to the external threat.

The effector may be located aboard each one of the second mobile entities and may be configured to perform a countermeasure to prevent the external threat from endangering the first mobile entity. The effector may perform active or passive countermeasures like ejecting chaff, flares, or decoys. The effector may also directly attack the external threat with guns or missiles that are located aboard the second mobile entity.

According to a further embodiment, the first mobile entity is connected to each of the second mobile entities by a data link.

The data link may be a wireless data connection between the first mobile entity and each of the second mobile entities. The data link may be used to transmit control commands from the first mobile entity to the respective second mobile entity.

According to a further embodiment, the first mobile entity is configured to acquire a state vector of the system and to command the at least one second mobile entity based on the acquired state vector.

According to a further embodiment, the state vector of the system includes one or more of: a position of the first mobile entity, a trajectory of the first mobile entity; a respective position of each one of the at least one second mobile entity; a respective trajectory of each one of the at least one second mobile entity.

A trajectory of the first mobile entity and of each of the second mobile entities may include the direction of movement, orientation, and speed of the respective mobile entity.

According to a further embodiment, the system is configured to predict a trajectory of the external threat and to command the at least one second mobile entity additionally based on the predicted trajectory of the external threat.

For example, the system comprises a flight computer or a mission computer which receives information about the external threat and/or the surroundings of the first mobile entity and of the system. Together with that information and in conjunction with the state vector of the system, the flight computer may determine which second mobile entity or second mobile entities to command to leave the formation and take countermeasures against the external threat.

The flight computer or mission computer may be a single computer entity, or it may consist of multiple distributed computers. The distributed computers may be arranged at or in the first mobile entity. Alternatively, one or more of the distributed computers may be arranged at or in the first mobile entity and one or more distributed computers may be arranged at or in one of the second mobile entities, respectively.

According to a further embodiment, the system is configured to, when the external threat is acquired, determine a modified trajectory for the first mobile entity and command the first mobile entity to follow the modified trajectory.

For example, when an external threat is detected, the system characterizes the external threat and predicts a trajectory thereof. Then, one or more of the second mobile entities are commanded to take countermeasures against the external threat. Furthermore, the first mobile entity is commanded to follow a modified trajectory to leave a danger zone.

In other words, the system is equipped with second mobile entities that protect the first mobile entity. The second mobile entities may take countermeasures against the external threat and/or may eventually intercept with the external threat to keep the external threat away from the first mobile entity.

### Brief description of the drawings

The subject matter will hereinafter be described in conjunction with the following drawing figures, wherein like numerals denote like elements, and wherein:
Fig. 1 is a schematic representation of a system according to an embodiment with reference to aerial platforms.
Fig. 2 is a schematic representation of a system showing a second mobile entity taking a countermeasure against an external threat.

### Detailed description of the drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

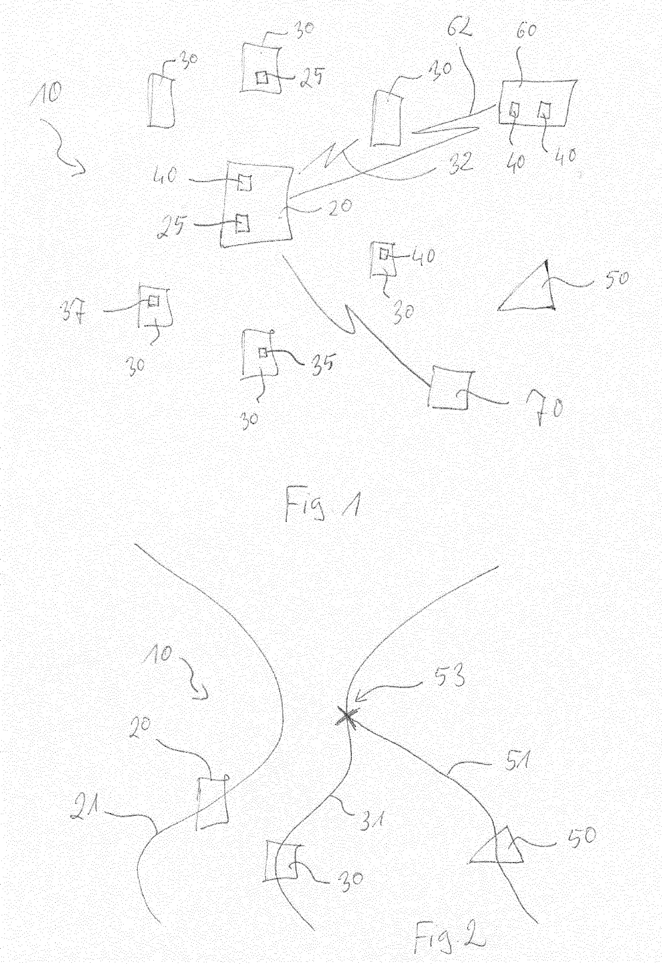

Fig. 1 shows a system 10 that comprises a first mobile entity 20 and multiple second mobile entities 30. The first mobile entity 20 is a so-called high-value aircraft which may transport persons and/or which contains valuable equipment. The second mobile entities 30 are unmanned aircraft and are configured to follow the first mobile entity. It is conceivable that the first mobile entity is configured to carry the second mobile entity when no external threat is expected or detected and that the second mobile entities are deployed in a situation where an external threat is likely to appear.

The first mobile entity 20 includes a mission computer 25 and sensors 40. Generally, it is noted that reference to a mission computer 25 when describing the examples presented herein also covers examples in which the functions assigned to the mission computer 25 are implemented and executed by a flight computer. The sensors 40 are configured to sense the surroundings of the first mobile entity for external threats. However, the first mobile entity may also receive sensor data from an external sensor platform 60 which includes multiple different sensors 40 that are configured to sense a surveillance region with sensors 40 working in different spectral regions (optical, acoustical, infrared, radar, lidar, any other electromagnetic wavelengths, radar warning receivers, missile approach warner). For example, the first mobile entity 20 receives sensor data from the sensor platform 60 via the data link 62. The external sensor platform may be a mobile or stationary platform, for example a surveillance aircraft/watercraft, etc.

The second mobile entities 30 include several components. While Fig. 1 shows that different components are assigned to different second mobile entities, it is noted that this assignment is shown in that way only for illustrative purposes. The second mobile entities may be structurally and functionally identical. A second mobile entity 30 includes one or more sensors 40, a drive 35, and one or more effectors 37. The sensor 40 is configured to acquire an external threat 50 that approaches the first or second mobile entities 20, 30. The drive 35 is a placeholder for any device that is designed to move the second mobile entity, like propeller, turbine engine, etc. The effector 37 is designed to take any active or passive countermeasure against the external threat, e.g., deploy chaffs, flares, decoys, jammers, etc., or fire a weapon against the external threat.

The first and second mobile entities include a mission computer 25. The mission computer controls the respective mobile entity and coordinates the trajectory of the first and second mobile entities 20, 30. For that reason, the first mobile entity 20 is communicatively coupled to each of the second mobile entities 30 via a data link 32. The individual mission computers 25 of the first and second mobile entities may exchange data about the external threat 50 and also exchange data about the own status so that a state vector is generated which is indicative of the status of the system 10. Based on the state vector of the system 10 and the information about the external threat 50, the mission computers 40 of the entities 20, 30 are able to determine an appropriate countermeasure and coordinate each of the first and second mobile entities to perform the required action.

The first mobile entity 20 or any of the second mobile entities 30 may be communicatively coupled to a mission control center 70 which may provide information to the entities 20, 30. For example, the mission control center 70 may provide information about approaching external threats 50 or generally about a threat situation so that the system can either prepare specific countermeasures or the first mobile entity 20 deploys the second mobile entities 30 to reduce the response time when external threats 50 occur.

The system 10 may also transmit sensor information to the mission control center 70 and receive prepared plans for countermeasures to be executed by the system 10. However, the system 10 is preferably configured to respond to external threats 50 autonomously without connection to the mission control center 70.

Preferably, the system 10 described herein collaboratively merges flight controls and countermeasures of different platforms, i.e., first and second mobile entities 20, 30 and commands the second mobile entities 30 to take countermeasures against an external threat 50 to protect the first mobile entity 20.

The mission computer 25 of the first mobile entity 20 and/or the group of mission computers 25 of the first and second mobile entities 20, 30 are configured to perform at least some of the following functions:
1. receive inputs from sensors 40 and defensive aid sub systems present in the first and second mobile entities 20, 30;
2. receive inputs from sensors 40 of an external sensor platform 60 or other means to improve situational awareness;
3. receive information from and about the first and second mobile entities and generate a state vector that includes the state of all team vehicles of the system 10;
4. distribute information (e.g., those received in the previous functions) among all mobile entities 20, 30 of the system 10;
5. determine external threat characteristics (e.g., incoming weapon characteristics like flight envelope, remaining flying time, expected range, warhead action radius, etc.) based on tables that are stored in the mission computer 25 and pre-loaded mission data;
6. if no data are available about the external threat, the mission computer is configured to predict its performance based on real-time characterization and observation of its behavior;
7. determining a strategy, trajectory, and timeline for the first mobile entity 20, at least one of the second mobile entities 30, and the external threat 50 to break radar lock, deploy countermeasures and evade weapon(s);
8. commanding one or several second mobile entities 30 to interpose their trajectory between the first mobile entity 20 and the external threat 50 as long as the external threat is still approaching the first mobile entity 20; the system may command multiple second mobile entities to move between the external threat 50 and the first mobile entity 20 so that additional second mobile entities can intercept with the external threat in case one second mobile entity misses the external threat 50;
9. countermeasures (chaff, flares, jammers, decoys) are deployed collaboratively by the first and/or one or more second mobile entities 20, 30;
10. one or more second mobile entities 30 adapt their trajectory in real-time to stay between the first mobile entity and the external threat.

Fig. 2 exemplarily shows how the first mobile entity 20 and one second mobile entity 30 are coordinated to protect the first mobile entity 20 from the external threat 50.

The sensors aboard the first and/or second mobile entity (or from an external sensor platform 60, see Fig. 1) detect an approaching external threat 50 and predict its trajectory 51 based on the acquired movement of the external threat 50. The system 10 determines a modified trajectory 21 for the first mobile entity 20 while the second mobile entity 30 is commanded to follow a trajectory 31 to an interception point 53 with the external threat 50.

Alternatively to moving to the interception point 53, the second mobile entity 30 may take other countermeasures, as described above, to protect the first mobile entity 20 from the external threat 50.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of reference signs

- 10: System
- 20: first mobile entity
- 21: trajectory
- 25: mission computer
- 30: second mobile entity
- 31: trajectory
- 32: data link
- 35: drive
- 37: effector
- 40: sensor
- 50: external threat
- 51: trajectory
- 53: interception point
- 60: sensor platform
- 62: data link
- 70: mission control

## Claims

1. System (10), comprising:
a first mobile entity (20); and
at least one second mobile entity (30);
wherein the first mobile entity (20) is communicatively connected to at least one sensor (40) configured to acquire information about the surroundings of the first mobile entity (20);
wherein the first mobile entity (20) is configured to determine that an external threat (50) acquired by the at least one sensor (40) poses a risk for the first mobile entity (20);
wherein the system (10) is configured to, when it was determined that the external threat acquired by the at least one sensor (40) poses a risk for the first mobile entity (20), command at least one of the at least one second mobile entity (30) to initiate a countermeasure against the external threat (50);
wherein the first mobile entity (20) is configured to command the at least one of the at least one second mobile entity (30) to move along a trajectory (31) between a position of the external threat (50) and the first mobile entity (20).

2. The system (10) of claim 1,
comprising a plurality of second mobile entities (30);
wherein each second mobile entity (30) comprises a drive (35) which is configured to cause a movement of the second mobile entity (30).

3. The system (10) of claim 2,
wherein the plurality of second mobile entities (30) is configured to be operated in a first state or in a second state;
wherein, in the first state, the plurality of second mobile entities (30) are configured to move around the first mobile entity (20) or along a trajectory of the first mobile entity (20);
wherein, in the second state, at least one of the plurality of second mobile entities (30) is commanded to attack or clear the external threat (50).

4. The system (10) of claim 3,
wherein, in the second state, at least one of the plurality of second mobile entities (30) is commanded to move along a trajectory (31) to an interception point with the external threat (50).

5. The system (10) of any one of the preceding claims,
wherein the at least one second mobile entity (30) is an unmanned vehicle.

6. The system (10) of any one of the preceding claims,
wherein the at least one second mobile entity (30) comprises an effector (37) that is configured to perform a countermeasure in response to the external threat.

7. The system (10) of any one of the preceding claims,
wherein the first mobile entity (20) is connected to each of the second mobile entities (30) by a data link (32).

8. The system (10) of claim 7,
wherein the first mobile entity (20) is configured to acquire a state vector of the system (10) and to command the at least one second mobile entity (30) based on the acquired state vector.

9. The system (10) of claim 8,
wherein the state vector of the system (10) includes one or more of: a position of the first mobile entity (20), a trajectory (21) of the first mobile entity (20); a respective position of each one of the at least one second mobile entity (30); a respective trajectory of each one of the at least one second mobile entity (30).

10. The system (10) of claim 8 or 9,
wherein the system (10) is configured to predict a trajectory (51) of the external threat and to command the at least one second mobile entity (30) additionally based on the predicted trajectory (51) of the external threat.

11. The system (10) of any one of the preceding claims,
wherein the system (10) is configured to, when the external threat is acquired, determine a modified trajectory (21) for the first mobile entity (20) and command the first mobile entity (20) to follow the modified trajectory (21).

## Amended claims

### Amended claims in accordance with Rule 137(2) EPC.

1. System (10), comprising:
a first mobile entity (20); and
at least one second mobile entity (30);
wherein the first mobile entity (20) is communicatively connected to at least one sensor (40) configured to acquire information about the surroundings of the first mobile entity (20);
wherein the first mobile entity (20) is configured to determine that an external threat (50) acquired by the at least one sensor (40) poses a risk for the first mobile entity (20);
wherein the system (10) is configured to, when it was determined that the external threat acquired by the at least one sensor (40) poses a risk for the first mobile entity (20), command at least one of the at least one second mobile entity (30) to initiate a countermeasure against the external threat (50);
wherein the first mobile entity (20) is configured to command the at least one of the at least one second mobile entity (30) to move along a trajectory (31) to be located between a position of the external threat (50) and the first mobile entity (20) while the first mobile entity moves, and to follow an interception trajectory between the first mobile entity and the position of the external threat.

2. The system (10) of claim 1,
comprising a plurality of second mobile entities (30);
wherein each second mobile entity (30) comprises a drive (35) which is configured to cause a movement of the second mobile entity (30).

3. The system (10) of claim 2,
wherein the plurality of second mobile entities (30) is configured to be selectively operated in one of a first state and a second state;
wherein, in the first state, the plurality of second mobile entities (30) are configured to move around the first mobile entity (20) or along a trajectory of the first mobile entity (20);
wherein, in the second state, at least one of the plurality of second mobile entities (30) is commanded to attack or clear the external threat (50).

4. The system (10) of claim 3,
wherein, in the second state, at least one of the plurality of second mobile entities (30) is commanded to move along a trajectory (31) to an interception point with the external threat (50).

5. The system (10) of any one of the preceding claims,
wherein the at least one second mobile entity (30) is an unmanned vehicle.

6. The system (10) of any one of the preceding claims,
wherein the at least one second mobile entity (30) comprises an effector (37) that is configured to perform a countermeasure in response to the external threat.

7. The system (10) of any one of the preceding claims,
wherein the first mobile entity (20) is connected to each of the second mobile entities (30) by a data link (32).

8. The system (10) of claim 7,
wherein the first mobile entity (20) is configured to acquire a state vector of the system (10) and to command the at least one second mobile entity (30) based on the acquired state vector.

9. The system (10) of claim 8,
wherein the state vector of the system (10) includes one or more of: a position of the first mobile entity (20), a trajectory (21) of the first mobile entity (20); a respective position of each one of the at least one second mobile entity (30); a respective trajectory of each one of the at least one second mobile entity (30).

10. The system (10) of claim 8 or 9,
wherein the system (10) is configured to predict a trajectory (51) of the external threat and to command the at least one second mobile entity (30) additionally based on the predicted trajectory (51) of the external threat.

11. The system (10) of any one of the preceding claims,
wherein the system (10) is configured to, when the external threat is acquired, determine a modified trajectory (21) for the first mobile entity (20) and command the first mobile entity (20) to follow the modified trajectory (21).
